Europäisches Patentamt

European Patent Office

Office européen des brevets

(11) Publication number: **0 445 585 A1**

## EUROPEAN PATENT APPLICATION

(21) Application number: 91102458.6

(22) Date of filing: 20.02.91

(51) Int. Cl.⁵: **A21D 2/36**

(30) Priority: 21.02.90 JP 38367/90

(43) Date of publication of application:
11.09.91 Bulletin 91/37

(84) Designated Contracting States:
CH DE FR GB LI NL

(71) Applicant: LOTTE CO., LTD
No. 20-1, Nishi-Shinjuku 3-chome
Shinjuku-ku Tokyo(JP)

(72) Inventor: Toshio, Takemori
3-19-19 Minami Ooizumi
Nerima-ku, Tokyo(JP)
Inventor: Fumio, Endo
952-14 Terao
Kawagoe-shi, Saitama-ken(JP)
Inventor: Koji, Murakami
1266-9 Ooyaguchi
Urawa-shi, Saitama-ken(JP)

(74) Representative: Grättinger, Günter
Wittelsbacherstrasse 5 Postfach 16 49
W-8130 Starnberg(DE)

(54) Biscuit by enzyme treatment and production method thereof.

(57) There is disclosed a biscuit by enzyme treatment comprising a material selected from the group consisting of cereals such as potato, corn, soybean or the like added to a dough as partial substitution of wheat flour, having been subjected to enzyme treatment with amylase alone or with combination of amylase and protease, followed by molding and baking. There is also disclosed a method for producing a biscuit wherein a material selected from the group consisting of cereals such as potato, corn, soybean or the like is added to a dough as partial substitution of wheat flour, and enzyme treatment is performed with amylase alone or with combination of amylase and protease, followed by molding and baking.

EP 0 445 585 A1

The present invention relates to a biscuit and a method for producing a biscuit by performing enzyme treatment, in particular relates to a biscuit and a method in which, for example, potato, corn, soybean or the like is used as partial substitution of wheat flour, and an adding amount of these materials to a biscuit can be increased by the enzyme treatment, thereby it is realized to provide a biscuit having a taste, flavor and mouth-feel lacking for conventional ones.

Generally, biscuits are produced by adding only wheat flour as cereal flour to a dough in many cases. Corn starch, corn flour, or the like is sometimes used as a starch component other than wheat flour, however, its adding amount usually does not exceed several %. Various biscuits are produced at present, however, it is considered that these show such diversity included in a range of dough in which wheat flour is used as almost all of the materials at most, so that from this meaning, it is also considered that a biscuit in which a large amount of cereal flour or cereals other than wheat flour are added to a biscuit dough exceeds the range of diversity of the conventional biscuits.

Conventionally, if a material other than wheat flour is added to a biscuit dough, such problems take place due to difference in starch, protein and the like that the consistency of the dough is lost, and processing by baking is deteriorated and the like, therefore due to these causes, only such a product could be obtained that provided no leavening having a very hard mouth-feel. In addition, powder feeling, stickness, rough feeling and the like peculiar to the material other than wheat flour made the mouth-feel of the product deteriorated.

On account of these reasons, the adding amount of the material other than wheat flour to the biscuit has been restricted, and a product could not be provided which made the best of the taste and flavor and the mouth-feel of the material.

The inconvenient factors which deteriorate the mouth-feel of the product such as the powder feeling, the stickness, the rough feeling and the like peculiar to the components of the material other than wheat flour such as potato, corn, soybean and the like are caused by physicochemical characteristics peculiar to these materials. If these inconvenient factors are intended to be decreased, and the physicochemical characteristics of the materials are improved to control and remove the inconvenient factors, then there causes such a possibility that the taste and flavor and the mouth-feel lacking for the conventional ones which are advantages of these materials are deteriorated at the same time. Therefore, when production of a biscuit is planned in which the material other than wheat flour is utilized to make the best of the unique taste and flavor and the mouth-feel of the original material, it is necessary to specifically control and remove only the factors inconvenient for the biscuit production.

The object of the present invention is to use a relatively large amount of cereals such as potato, corn, soybean, or the like as partial substitution of wheat flour, and only the factors inconvenient for the biscuit production given by these materials are specifically controlled and removed, so as to control the leavening (processing by baking) by the adjustment of water retentivity of starch and the like and control the powder feeling, the stickness, the rough feeling and the like given by the components of the materials to be used themselves, thereby the adding amount of these materials to a biscuit is increased to produce a biscuit having a taste and flavor and a mouth-feel lacking for the conventional ones.

According to the present invention, there is provided a biscuit by enzyme treatment comprising a material selected from the group consisting of cereals such as potato, corn, soybean or the like added to a dough as partial substitution of wheat flour, having been subjected to enzyme treatment with amylase alone or with combination of amylase and protease, followed by molding and baking.

According to the present invention, there is also provided a method for producing a biscuit wherein a material selected from the group consisting of cereals such as potato, corn, soybean or the like is added to a dough as partial substitution of wheat flour, and enzyme treatment is performed with amylase alone or with combination of amylase and protease, followed by molding and baking.

As the material other than wheat flour, without limiting to those exemplified above, all cereal powder or cereals subjected to the enzyme action by amylase alone or the combination of amylase and protease can be used. The cereal powder or cereals are preferably added as granule materials or powder materials.

As the enzyme, amylase and protease can be used.

It is preferable that to the biscuit dough containing potato not less than 15% by dry weight are added 0.001 to 1.0% of amylase or amylase and protease respectively, and the enzyme treatment is performed, followed by molding and baking.

The adding amount of potato to the dough is preferably 15 to 40%, most preferably 25 to 35% by dry weight, thereby a product having a stable quality can be obtained. If it is not more than 15%, the potato taste and flavor is deficient, and if it exceeds 40%, there is given such a tendency that sufficient leavening cannot be obtained even after the amylase treatment. Conventionally, when it is not less than 15%, "floating" (leavening) is not provided, thus the mouth-feel has been very hard. This is considered to be due

2

to the influence of the water retentivity of starch.

The enzyme to be used for the treatment of the potato-containing dough is amylase alone or the combination of amylase and protease, and the adding amount is in a range of 0.001 to 1.0% respectively, however, it is preferable as activity that amylase is 3500 to 35000 units and protease is 3000 to 30000 units (determined by the FCC method for both of them) for one kg of potato (dry weight). If amylase is less than 0.001%, the effect on improvement of leavening is not provided, and if it exceeds 1.0%, the control of the treatment time becomes difficult, sometimes resulting in deterioration of the taste and flavor.

It is preferable that to the biscuit dough containing corn not less than 15%, preferably not less than 20 to 45% by dry weight is added the combination of 0.001 to 1.0% of amylase and protease respectively, and the enzyme treatment is performed, followed by molding and baking.

When the biscuit is produced using corn as the material, conventionally it has been found that the hardness of protein expresses in the mouth-feel by addition not less than 15% of it.

It is preferable that to the biscuit dough containing soybean not less than 15% by dry weight is added the combination of 0.001 to 1.0% of amylase and protease respectively, and the enzyme treatment is performed, followed by molding and baking.

When the biscuit is produced using soybean as the material, conventionally due to the protein of soybean, a hard and tight dough having a little consistency is given, resulting in a hard mouth-feel.

In the present invention, various materials other than wheat flour can be used, and especially for the cereals such as potato, corn, and soybean, the use of amylase and protease is especially effective.

When the material other than wheat flour is added to the dough as the partial substitution of wheat flour to perform the enzyme treatment, the treatment condition should be optionally determined depending on the type of the material, the adding amount, the type of the enzyme and its adding amount, however, in general the treatment temperature can be 30 to 50° C, and the treatment time can be 30 to 300 minutes. Evaluation of the treatment can be carried out, for example, by the mouth-feel of the product and the specific gravity of the product.

Incidentally, the present invention can be applied to other confectionery such as cookies, crackers and the like.

As described above, the material other than wheat flour such as cereals of potato, corn, soybean and the like has the inconvenient factors to deteriorate the mouth-feel of the product such as the powder feeling, the stickness, the rough feeling and the like peculiar to it, however, when the production of a biscuit is planned in which the original and unique taste and flavor and the mouth-feel of the material are sufficiently utilized, it is necessary to specifically control and remove only the factors inconvenient for the biscuit production with maintaining the unique taste and flavor and the mouth-feel.

In the present invention, these materials other than wheat flour are used as the partial substitution of wheat flour, and it is made possible to increase the adding amount of these materials to the biscuit by the enzyme treatment, thereby it is realized that the biscuit having the taste and flavor and the mouth-feel lacking for the conventional ones is provided.

Namely, in the present invention, only the factors of these materials inconvenient for the biscuit production are specifically controlled and removed by the enzyme treatment, and the reduction of the water retentivity of starch, the improvement in processing by baking and leavening, and the reduction of the stickness are designed, so as to increase the adding amount of these materials to the biscuit, so that there can be provided the biscuit having the taste and flavor and the mouth-feel lacking for the conventional ones.

For example, the adding amount of potato can be greatly increased by the treatment of the present inventoin notwithstanding the conventional limit of 5 to 10%, and the potato feeling can be increased. This makes it possible to produce a hard dough biscuit which has the potato feeling and is light and crisp having little powder feeling.

According to the present invention, the enzyme treatment production method of the material other than wheat flour makes it possible to increase the adding amount of the material which could be added in a little amount in the conventional ones, and the biscuit having a novel taste, flavor and mouth-feel can be obtained which could not be obtained only by wheat flour.

In addition, according to the present invention, the treatment of amylase alone or of the combination of amylase and protease can improve the processing by baking and leavening by the adjustment of the water retentivity and reduce the powder feeling, the stickness, the rough feeling and the like given by the components of the material themselves, so that the adding amount to the biscuit can be increased.

Further, according to the present invention, in accrodance with the increase in the adding amount of these materials, it becomes possible to produce the biscuit having a blending ratio which could not been achieved only by wheat flour (for example, a hard dough biscut having a large amount of oils and fats and the like), and the biscuit having the mouth-feel lacking for the conventional ones can be obtained in which the original mouth-feel of the material itself is sufficiently utilized.

According to the present invention, the material other than wheat flour such as for example potato, corn, soybean and the like is contained as the partial substitution of wheat flour by not less than 15%, and by means of the enzyme treatment, only the inconvenient factors for biscuit production given by these materials are specifically controlled and removed, and the leavening (processing by baking) is controlled by the adjustment of the water retentivity of starch, protein or the like, and the powder feeling, the stickness, the rough feeling and the like given by the components of the material to be used themselves are controlled, thereby the limit of the adding amount of these meterials to the biscuit is increased, and the biscuit having the taste and flavor and the mouth-feel lacking for the conventional ones can be produced in which the taste and flavor of the material is sufficiently utilized.

The present invention will be explained in detail hereinafter according to examples, however, the present invention is not limited only to the following examples.

Incidentally, all of the numerals described here (the addition %) are shown by dry weight % for a product.

Example 1, Comparative tests 1 and 2 (Comparison of the specific gravity of the product)

To a dough containing 40% of potato was added 0.05% of Denazyme SA (Nagase Biochemicals, Ltd.), and the enzyme treatment was performed at 40 ° C for 30 minutes, after which molding and baking were carried out to produce a hard dough biscuit to be a group of amylase addition and 30 minutes treatment (Example 1).

A hard dough biscuit was produced in the same manner with the enzyme treatment time of 0 minute to be a group of amylase addition and 0 minutes treatment (Comparative test 1).

In addition, a dough without addition of amylase was used to be kept static for 30 minutes, after which a hard dough biscuit was produced in the same manner to be a group without treatment of amylase (Denazyme SA) that is a group without amylase addition and 30 minutes treatment (Comparative test 2).

The results of comparison of the product specific gravity are shown in Table 1 with respect to these biscuits.

### Table 1

| | Product specific gravity $(g/cm^3)$ | Product moisture content (%) |
|---|---|---|
| Example 1 | 0.362 | 4.3 |
| Comparative test 1 | 0.501 | 4.1 |
| Comparative test 2 | 0.519 | 4.5 |

### Example 2

To a biscuit dough containing 35% of potato and having an oils and fats content of 10% was added 0.01% of Diasmen (Daiwa Chemical Co., Ltd.) as amylase, which was subjected to the treatment at 40 ° C for 30 minutes, followed by rolling, laminating, demolding, and baking to try to produce a hard dough biscuit.

This biscuit had the potato feeling, which was a light and crisp hard dough biscuit having little powder feeling.

### Example 3

A biscuit dough containing 30% of corn flour in which 0.1% of Protease P (Amano Pharmaceutical Co., Ltd.) and 0.03% of Kokulase (Sankyo Co., Ltd.) as amylase were added was prepared, which was treated at 40 ° C for 45 minutes, followed by rolling, laminating, demolding, and baking to obtain a hard dough biscuit.

In this biscuit, the deterioration in the mouth-feel due to the use of corn flour (a tendency of being hard and difficult to float) was improved, and it was a biscuit having a soft mouth-feel having rich taste and flavor of corn.

Example 4

A biscuit dough containing 25% of roasted soybean powder in which 0.02% of Amylase AD (Amano Pharmaceutical Co., Ltd.) as amylase and IP-Protease (Seisin Pharmaceutical Co., Ltd.) as protease were added was treated at 37 ° C for 60 minutes, followed by molding and baking to obtain a biscuit.

In this biscuit, the hardness of the mouth-feel due to the addition of soybean powder was restricted, and it was a biscuit in which the good taste and flavor from soybean were sufficiently utilized.

**Claims**

1. A biscuit by enzyme treatment comprising a material selected from the group consisting of cereals such as potato, corn, soybean or the like added to a dough as partial substitution of wheat flour, having been subjected to enzyme treatment with amylase alone or with combination of amylase and protease, followed by molding and baking.

2. A method for producing a biscuit wherein a material selected from the group consisting of cereals such as potato, corn, soybean or the like is added to a dough as partial substitution of wheat flour, and enzyme treatment is performed with amylase alone or with combination of amylase and protease, followed by molding and baking.

3. The method for producing a biscuit according to claim 2, wherein to the biscuit dough containing potato as the cereals other than wheat flour not less than 15% by dry weight are added 0.001 to 1.0% of amylase or amylase and protease respectively, and the enzyme treatment is performed, followed by molding and baking.

4. The method for producing a biscuit according to claim 2, wherein to the biscuit dough containing corn as the cereals other than wheat flour not less than 15% by dry weight is added combination of 0.001 to 1.0% of amylase and protease respectively, and the enzyme treatment is performed, followed by molding and baking.

5. The method for producing a biscuit according to claim 2, wherein to the biscuit dough containing soybean as the cereals other than wheat flour not less than 15% by dry weight is added combination of 0.001 to 1.0% of amylase and protease respectively, and the enzyme treatment is performed, followed by molding and baking.

European
Patent Office

EUROPEAN SEARCH
REPORT

Application Number

EP 91 10 2458

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 327 731   (GIST BROCADES N.V.) <br> * Claims 1-4,9-14,18; page 2, lines 28-34; example 4 * | 1-5 | A 21 D 2/36 |
| X | CHEMICAL ABSTRACTS, vol. 93, 1980, page 736, abstract no. 44293x, Columbus, Ohio, US; K. CHAKRABORTI et al.: "High-protein bread from wheat and nondefatted soybean flours", <br> & NAUCHNI TR., VISSH INST. KHRANIT. VKUSOVA PROM-ST., PLOVDIV 1977, 24. Pt. 1, 117-28 <br> * Abstract * | 1,2,5 | |
| P,X | FR-A-2 636 504   (MINOTERIE DU COUTELET et al.) <br> * Claims * | 1,2 | |
| A | | 4 | |
| X | GB-A-1 767 52   (R. GRAHAM) <br> * Claims; page 2, lines 106-125 * | 1,2,5 | |
| X | GB-A-2 228 19   (R. OSMUNDSEN) <br> * Claims 1-3; page 1, lines 19-65; example X * | 1-4 | |
| X | FR-A-2 574 628   (SOCIETE AUXILIAIRE DE MEUNERIE) <br> * Summary and claims * | 1,2,4 | TECHNICAL FIELDS SEARCHED (Int. Cl.5) <br><br> A 21 D |

The present search report has been drawn up for all claims

| Place of search | Date of completion of search | Examiner |
|---|---|---|
| The Hague | 05 June 91 | COUCKE A.O.M. |